# EUROPÄISCHE PATENTSCHRIFT

(11) **EP 0 791 035 B1**
(45) Veröffentlichungstag und Bekanntmachung des Hinweises auf die Patenterteilung: **14.04.1999**
(21) Anmeldenummer: 95937860.5
(22) Anmeldetag: 03.11.1995
(51) Int. Cl.: C09B 53/00, C09B 55/00, B41M 5/38

(54) **AZAMETHINFARBSTOFFE**
AZAMETHINE DYES
COLORANTS DU TYPE AZAMETHINE

(30) Priorität: 12.11.1994 DE 4440486
(43) Veröffentlichungstag der Anmeldung: 27.08.1997
(73) Patentinhaber: BASF AKTIENGESELLSCHAFT, 67056 Ludwigshafen (DE)
(72) Erfinder: SENS, Rüdiger, D-68165 Mannheim (DE); SCHMIDT, Andreas, Johann, D-67251 Freinsheim (DE); BECKMANN, Stefan, D-67098 Bad Dürkheim (DE); ETZBACH, Karl-Heinz, D-67227 Frankenthal (DE)
(86) Internationale Anmeldenummer: EP9504314
(87) Internationale Veröffentlichungsnummer: WO9615196

(56) Entgegenhaltungen:
- EP-A- 0 480 252
- US-A- 4 975 409
- US-A- 5 227 359
- US-A- 5 238 903

## Beschreibung

Die vorliegende Erfindung betrifft neue Azamethinfarbstoffe der Formel I 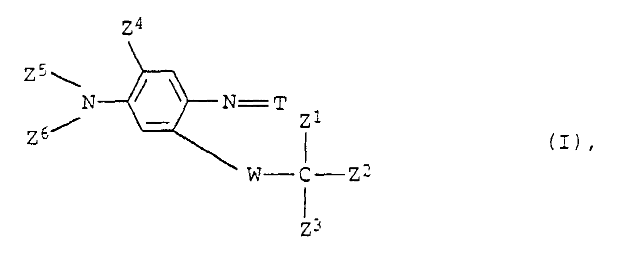 in der
- W: Sauerstoff, Schwefel oder einen Rest der Formel -NH-CO-, -NH-COO- oder -NH-SO₂,
- Z¹: C₁-C₄-Alkyl, das gegebenenfalls durch ein Sauerstoffatom in Etherfunktion unterbrochen ist, Benzyl, Phenylethyl, Phenyl oder C₁-C₄-Alkoxy,
- Z² und Z³: unabhängig voneinander jeweils Wasserstoff, C₁-C₄-Alkyl, das gegebenenfalls durch ein Sauerstoffatom in Etherfunktion unterbrochen ist, Benzyl oder Phenylethyl, wobei der Rest-CZ¹Z²Z³ nicht linear sein darf und von Isopropyl verschieden ist,
- Z⁴: Wasserstoff, C₁-C₄-Alkyl oder C₁-C₄-Alkoxy,
- Z⁵ und Z⁶: unabhängig voneinander jeweils C₁-C₁₀-Alkyl, das gegebenenfalls substituiert ist und durch 1 bis 3 Sauerstoffatome in Etherfunktion unterbrochen sein kann, C₃-C₄-Alkenyl, C₅-C₇-cycloalkyl, Phenyl oder Tolyl oder zusammen mit dem sie verbindenden Stickstoffatom einen 5- oder 6-gliedrigen gesättigten heterocyclischen Rest, der gegebenenfalls weitere Heteroatome enthält, oder Z⁴ und Z⁵ zusammen ein 2- oder 3-gliedriges Brückenglied, das ein Heteroatom aufweisen kann, und
- T: einen Rest der Formel 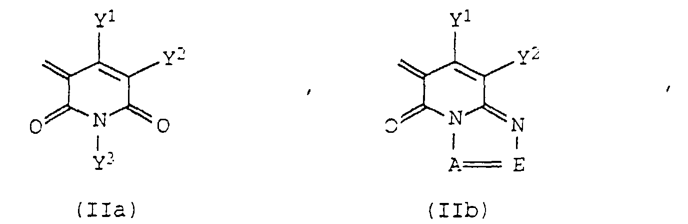 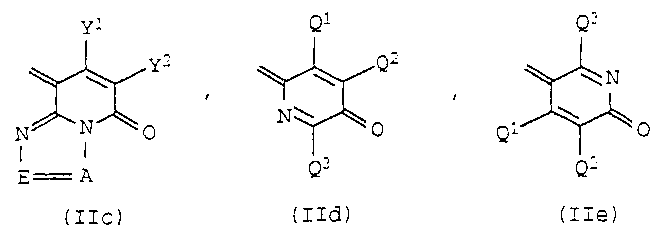 oder 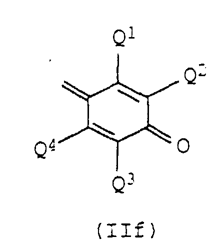 bedeuten, worin
- Y¹: für Wasserstoff, C₁-C₄-Alkyl, das gegebenenfalls durch ein Sauerstoffatom in Etherfunktion unterbrochen ist, C₁-C₄-Fluoralkyl, gegebenenfalls substituiertes Phenyl, oder C₁-C₈-Alkoxycarbonyl,
- Y²: für Cyano, Carbamoyl, C₁-C₈-Mono- oder Dialkylcarbamoyl, Carboxyl oder C₁-C₈-Alkoxycarbonyl,
- Y³: für C₁-C₁₀-Alkyl, das gegebenenfalls substituiert ist und durch 1 bis 3 Sauerstoffatome in Etherfunktion unterbrochen sein kann, C₅-C₇-Cycloalkyl, gegebenenfalls substituiertes Phenyl, oder einen Rest der Formel NB¹B², worin B¹ und B² unabhängig voneinander jeweils die Bedeutung von Wasserstoff, C₁-C₁₀-Alkyl, gegebenenfalls substituiertem Phenyl, C₁-C₉-Alkanoyl, Phenylsulfonyl, Pyridylsulfonyl, gegebenenfalls substituiertem Benzoyl, Pyridylcarbonyl oder Thienylcarbonyl besitzen,
- einer der beiden Reste A und E: für Stickstoff und der andere für einen Rest der Formel C-Y⁴, worin Y⁴ die Bedeutung von C₁-C₂₀-Alkyl, das gegebenenfalls substituiert ist und durch 1 bis 4 Sauerstoffatome in Etherfunktion unterbrochen sein kann, gegebenenfalls substituiertem Phenyl, Mercapto oder gegebenenfalls substituiertem C₁-C₂₀-Alkylthio besitzt, und
- Q¹, Q², Q³ und Q⁴: unabhängig voneinander jeweils für Wasserstoff, C₁-C₁₀-Alkyl, C₁-C₁₀-Fluoralkyl, C₁-C₄-Alkoxy, Halogen, Formylamino oder einen Rest der Formel R³, -CO-OR¹, -CO-NHR¹, -CO-NH-CO-R¹, -CO-NH-CO-R³, -CO-NH-SO₂-R³, -NH-CO-R¹, -NH-CO-OR¹, -NH-CO-NR¹R², NH-CS-OR¹, -NH-CS-NR¹R², -NH-CO-R³, -NH-SO₂-R¹, -NH-SO₂-R³ oder -NH-SO₂-NR¹R², worin R¹ und R² unabhängig voneinander jeweils die Bedeutung von C₁-C₁₀-Alkyl, das gegebenenfalls substituiert ist und durch 1 bis 3 Sauerstoffatome in Etherfunktion unterbrochen sein kann, C₁-C₁₀-Fluoralkyl, C₅-C₇-Cycloalkyl, Phenyl oder Tolyl oder -NR¹R² auch die Bedeutung von Amino und R³ die Bedeutung eines 5- oder 6-gliedrigen aromatischen heterocyclischen Rests, der gegebenenfalls benzoanelliert ist und ein oder mehrere Heteroatome, ausgewählt aus der Gruppe, bestehend aus Stickstoff, Sauerstoff und Schwefel aufweist, besitzen, oder Q¹ und Q² zusammen mit den Kohlenstoffatomen, an die sie geknüpft sind, für einen 5- oder 6-gliedrigen carbocyclischen oder heterocyclischen Ring stehen,
sowie ein Verfahren zu ihrer thermischen Übertragung.

Aus der US-A-5 079 365, US-A-5 312 926, US-A-5 218 120, US-A-5 221 658, US-A-5 310 942, US-A-5 225 548, US-A-5 034 371 sowie der älteren Patentanmeldung PCT/EP 95/00564 sind ähnliche Farbstoffe bekannt. Es hat sich jedoch gezeigt, daß diese Farbstoffe noch Mängel in ihren anwendungstechnischen Eigenschaften aufweisen. Auch die US-A-4 975 409, US-A-5 238 903 und US-A-5 227 359 beschreiben Azamethinfarbstoffe.

Aufgabe der vorliegenden Erfindung war es, neue Azamethinfarbstoffe bereitzustellen, die sich vorteilhaft für Non-impact-printing-Verfahren, beispielsweise für den thermischen Transfer eignen und dabei insbesondere hohe thermische Stabilität, hohe Lichtechtheit, hohe Farbstärke und hohe Brillanz aufweisen. Die neuen Farbstoffe sollten auch vorteilhaft zum Färben oder Bedrucken von textilen Materialien geeignet sein.

Demgemäß wurden die eingangs näher bezeichneten Azamethinfarbstoffe der Formel I gefunden.

Alle in den obengenannten Formeln auftretenden Alkyl- und Alkenylgruppen können sowohl geradkettig als auch verzweigt sein. Wenn in den obengenannten Formeln substituierte Alkylreste auftreten, so können als Substituenten z.B. gegebenenfalls substituiertes Phenyl, gegebenenfalls substituiertes Phenoxy, Carboxyl, C₁-C₂₀-Alkoxycarbonyl, dessen Alkylkette gegebenenfalls durch 1 bis 4 Sauerstoffatome in Etherfunktion unterbrochen und durch Phenyl oder Phenoxy substituiert sein kann, Cyano, C₁-C₆-Alkanoyloxy, C₁-C₄-Alkylaminocarbonyloxy oder C₁-C₄-Alkoxycarbonyloxy, wobei in den beiden letztgenannten Fällen die Alkylgruppe jeweils durch Phenyl oder C₁-C₄-Alkoxy substituiert sein kann, in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind solche Alkylreste bevorzugt, die durch 1 oder 2 Sauerstoffatome in Etherfunktion unterbrochen sind.

Wenn in den obengenannten Formeln substituierte Phenylreste auftreten, so können als Substituenten z.B. C₁-C₄-Alkyl, C₁-C₄-Alkoxy, Halogen, dabei insbesondere Chlor oder Brom, Nitro oder Carboxyl in Betracht kommen. Die Phenylreste weisen dabei in der Regel 1 bis 3 Substituenten auf.

Geeignete Reste B¹, B², Q¹, Q², Q³, Q⁴, R¹, R², Y¹, Y³, Y⁴, Z¹, Z², Z³, Z⁴, Z⁵ und Z⁶ sind z.B. Methyl, Ethyl, Propyl, Isopropyl, Butyl, Isobutyl, sec-Butyl oder tert-Butyl.

Reste B¹, B², Q¹, Q², Q³, Q⁴, R¹, R², Y³, Y⁴, Z⁵ und Z⁶ sind weiterhin z.B. Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl oder Isodecyl.

Reste Y⁴ sind weiterhin z.B. Undecyl, Dodecyl, Tridecyl, Isotridecyl, Tetradecyl, Pentadecyl, Hexadecyl, Heptadecyl, Octadecyl, Nonadecyl oder Eicosyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. A1, Seiten 290 bis 293, sowie Vol. A 10, Seiten 284 und 285).]

Reste R¹, R², Y¹, Y³, Y⁴, Z¹, Z², Z³, Z⁵ und Z⁶ sind z.B. Methoxymethyl, 2-Methoxyethyl, 2-Ethoxyethyl oder 2- oder 3-Methoxypropyl.

Reste R¹, R², Y³, Y⁴, Z⁵ und Z⁶ sind weiterhin z.B. 2-Propoxyethyl, 2-Butoxyethyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,9-Trioxadecyl, 3,6,9-Trioxaundecyl, 2-Carboxylethyl, 2- oder 3-Carboxylpropyl, Benzyl, 1- oder 2-Phenylethyl, 2-, 3- oder 4-Methylbenzyl, 2-, 3- oder 4-Methoxybenzyl, 2-, 3- oder 4-Chlorbenzyl, 2-, 3- oder 4-Nitrobenzyl, 3-Benzyloxypropyl, Phenoxymethyl, 6-Phenoxy-4-oxahexyl, 8-Phenoxy-4-oxaoctyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-Methylaminocarbonyloxyethyl, 2-oder 3-Ethylaminocarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste Q¹, Q², Q³, Q⁴, R¹, R² und Y¹ sind weiterhin z.B. Fluormethyl, Difluormethyl, Trifluormethyl, 1,1,1-Trifluorethyl, Pentylfluorethyl, Bis(trifluormethyl)methyl oder Heptafluorpropyl.

Reste Y⁴ sind weiterhin z.B. 3,6,9,12-Tetraoxatridecyl, 3,6,9,12-Tetraoxatetradecyl, Methylthio, Ethylthio, Propylthio, Isopropylthio, Butylthio, Isobutylthio, sec-Butylthio, Pentylthio, Isopentylthio, Neopentylthio, tert-Pentylthio, Hexylthio, Heptylthio, 1-Ethylpentylthio, Octylthio, Isooctylthio, 2-Ethylhexylthio, Nonylthio, Isononylthio, Decylthio, Isodecylthio, Undecylthio, Dodecylthio, Tridecylthio, Isotridecylthio, Tetradecylthio, Pentadecylthio, Hexadecylthio, Heptadecylthio, Octadecylthio, Nonadecylthio oder Eicosylthio.

Reste B¹, B², Y¹, Y³ und Y⁴ sind weiterhin z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2-, 3- oder 4-Carboxylphenyl oder 2-, 3- oder 4-Nitrophenyl.

Reste Q¹, Q², Q³, Q⁴, Y³, Z⁵ und Z⁶ sind weiterhin z.B. Cyclopentyl, Cyclohexyl oder Cycloheptyl.

Reste Z⁵ und Z⁶ sind weiterhin z.B. Allyl oder Methallyl.

Reste Y² sind z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, Mono- oder Dipentylcarbamoyl, Mono- oder Dihexylcarbamoyl, Mono- oder Diheptylcarbamoyl, Mono- oder Dioctylcarbamoyl, Mono- oder Bis(2-ethylhexyl)carbamoyl oder N-Methyl-N-ethylcarbamoyl.

Reste B¹ und B² sind weiterhin z.B. Formyl, Acetyl, Propionyl, Butyryl, Isobutyryl, Pentanoyl, Hexanoyl, Heptanoyl, Octanoyl, 2-Ethylhexanoyl, Isooctanoyl, Nonanoyl, Isononanoyl, Benzoyl, 2-, 3- oder 4-Methylbenzoyl oder 2-, 3- oder 4-Methoxybenzoyl.

Reste Y¹ und Y² sind weiterhin z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, Hexyloxycarbonyl, Heptyloxycarbonyl, Octyloxycarbonyl, Isooctyloxycarbonyl oder 2-Ethylhexyloxycarbonyl.

Reste Q¹, Q², Q³ und Q⁴ sind weiterhin z.B. Fluor, Chlor oder Brom.

Reste Q¹, Q², Q³, Q⁴, Z¹ und Z⁴ sind weiterhin z.B. Methoxy, Ethoxy, Propoxy, Isopropoxy, Butoxy, Isobutoxy, sec-Butoxy oder tert-Butoxy.

Wenn Z⁴ und Z⁵ zusammen ein 2- oder 3-gliedriges Brückenglied bedeuten, das ein Heteroatom aufweisen kann, so können dafür z.B. Ethylen, 1,3-Propylen, das gegebenenfalls dreifach durch Methyl substituiert ist, oder Ethylenoxy in Betracht kommen.

Wenn Q¹ und Q² zusammen mit den Kohlenstoffatomen, an die sie geknüpft sind, einen 5- oder 6-gliedrigen carbocyclischen oder heterocyclischen Ring bedeuten, so kommen dafür insbesondere der Benzol-, Pyridin-, Pyrrolinon- oder Dihydropyridonring in Betracht, wobei diese Ringe jeweils 1- bis 3-fach durch C₁-C₄-Alkyl, C₁-C₄-Alkoxy oder Halogen substituiert sein können.

Wenn Z⁵ und Z⁶ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Reste R³ leiten sich von einem 5- oder 6-gliedrigen aromatischen heterocyclischen Rest ab, der gegebenenfalls benzoanelliert ist und der ein oder mehrere Heteroatome, ausgewahlt aus der Gruppe, bestehend aus Stickstoff, Sauerstoff und Schwefel, aufweist,

Geeignete heterocyclische Grundkörper, die Substituenten tragen können, von denen sich die Reste R³ ableiten, sind z.B. Pyrrol, Furan, Thiophen, Pyrazol, Imidazol, Oxazol, Thiazol, Isothiazol, 1,2,4-Triazol, 1,2,4-Oxadiazol, 1,3,4-Oxadiazol, 1,2,4-Thiadiazol, 1,3,4-Thiadiazol, Pyridin, Pyridazin, Pyrimidin oder Pyrazin.

Hervorzuheben sind dabei Heterocyclen aus der Pyrrol-, Thiophen-, Isoxazol-, Pyridin- oder Pyridazinreihe.

Als Reste R³-CO oder R³-SO₂ kommen insbesondere solche 5- oder 6-gliedrigen aromatischen heterocyclischen Reste in Betracht, die sich von den folgenden heterocyclischen Carbonsäuren R³-COOH oder Sulfonsäuren R³-SO₃H ableiten: 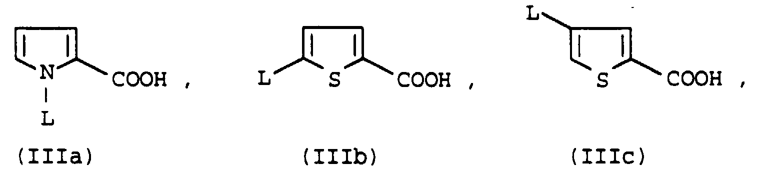 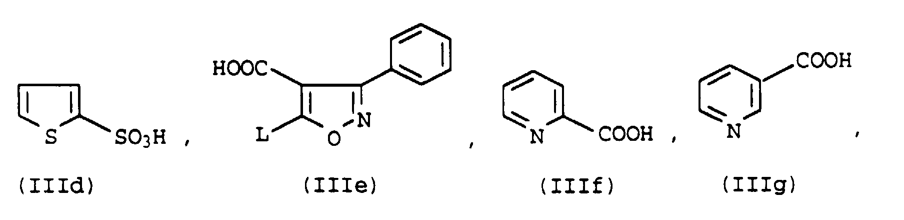 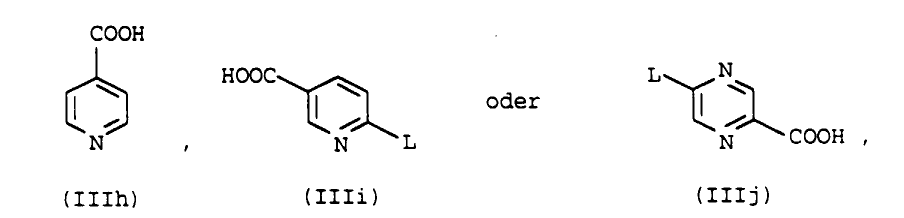 wobei L jeweils für C₁-C₄-Alkyl steht.

Als Reste R³ kommen insbesondere die Reste der Formeln IIIa bis IIIj in Betracht, die anstelle der COOH- oder SO₃H-Gruppe eine Einfachbindung aufweisen.

Bevorzugt sind Azamethinfarbstoffe der Formel I, in der W einen Rest der Formel -NH-CO- bedeutet.

Weiterhin bevorzugt sind Azamethinfarbstoffe der Formel I, in der Z¹, Z² und Z³ unabhängig voneinander jeweils C₁-C₄-Alkyl bedeuten.

Weiterhin bevorzugt sind Azamethinfarbstoffe der Formel I, in der Z⁴ Wasserstoff bedeutet.

Weiterhin bevorzugt sind Azamethinfarbstoffe der Formel I, in der Z⁵ und Z⁶ unabhängig voneinander jeweils C₁-C₁₀-Alkyl oder zusammen mit dem sie verbindenden Stickstoffatom einen 5- oder 6-gliedrigen gesattigten heterocyclischen Rest, der noch ein Stickstoff- oder Sauerstoffatom im Ring enthalten kann, bedeuten.

Weiterhin bevorzugt sind Azamethinfarbstoffe der Formel I, in der im Rest T Y¹ für C₁-C₄-Alkyl steht.

Weiterhin bevorzugt sind Azamethinfarbstoffe der Formel I, in der im Rest T Y² für Cyano steht.

Weiterhin bevorzugt sind Azamethinfarbstoffe der Formel I, in der im Rest T Y³ für C₁-C₁₀-Alkyl, C₁-C₉-Alkanoylamino, Benzoylamino, Bis(C₁-C₉-alkanoyl)amino oder N-(C₁-C₉-Alkanoyl)-N-benzoylamino steht.

Weiterhin bevorzugt sind Azamethinfarbstoffe der Formel I, in der im Rest T Y⁴ die Bedeutung von C₁-C₂₀-Alkyl besitzt, das durch 1 bis 4 Sauerstoffatome in Etherfunktion unterbrochen sein kann.

Weiterhin bevorzugt sind Azamethinfarbstoffe der Formel I, in der im Rest T Q¹, Q², Q³ und Q⁴ unabhängig voneinander jeweils für Wasserstoff, C₁-C₈-Alkyl, Halogen oder C₁-C₁₁-Alkanoylamino oder Q¹ und Q² zusammen mit den Kohlenstoffatomen, an die sie geknüpft sind, für einen Benzol-, Pyridin-, Pyrrolinon- oder Dihydropyridonring, der durch C₁-C₄-Alkyl oder Halogen substituiert sein kann, stehen.

Besonders bevorzugt sind Azamethinfarbstoffe der Formel I, in der T einen Rest der Formel IId, IIe oder IIf bedeutet, wobei den Resten IId und IIf besondere Bedeutung zukommt.

Besonders bevorzugt sind weiterhin Azamethinfarbstoffe der Formel I, in der der Rest -CZ¹Z²Z³ verzweigtes C₄-C₁₃-Alkyl bedeutet, wobei der Rest -CZ¹Z²Z³, in dem Z¹, Z² und Z³ jeweils C₁-C₄-Alkyl, insbesondere Methyl, bedeuten, besonders zu nennen ist.
Von besonderem technischen Interesse sind Azamethinfarbstoffe der Formel Ia 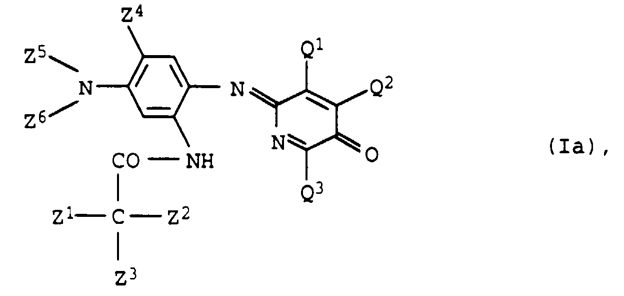 in der
- Z¹, Z² und Z³: unabhängig voneinander jeweils C₁-C₄-Alkyl, insbesondere Methyl,
- Z⁴: Wasserstoff, C₁-C₄-Alkyl oder C₁-C₄-Alkoxy,
- Z⁵ und Z⁶: unabhängig voneinander jeweils C₁-C₁₀-Alkyl,
- Q¹ und Q²: unabhängig voneinander jeweils Wasserstoff, C₁-C₆-Alkyl, Trifluormethyl oder Halogen und
- Q³: C₁-C₁₁-Alkanoylamino, insbesondere C₂-C₈-Alkanoylamino, oder gegebenenfalls durch Methyl substituiertes Benzoylamino bedeuten.

Von besonderem technischen Interesse sind weiterhin Azamethinfarbstoffe der Formel Ia,
in der
- Z¹, Z² und Z³: unabhängig voneinander jeweils C₁-C₄-Alkyl, insbesondere Methyl,
- Z⁴: Wasserstoff, C₁-C₄-Alkyl oder C₁-C₄-Alkoxy,
- Z⁵ und Z⁶: unabhängig voneinander jeweils C₁-C₁₀-Alkyl,
- Q¹ und Q³: unabhängig voneinander jeweils Wasserstoff, C₁-C₆-Alkyl, Trifluormethyl oder Halogen und
- Q²: C₁-C₁₁-Alkanoylamino, insbesondere C₂-C₈-Alkanoylamino, oder gegebenenfalls durch Methyl substituiertes Benzoylamino bedeuten.

Von besonderem technischen Interesse sind weiterhin Azamethinfarbstoffe der Formel Ib 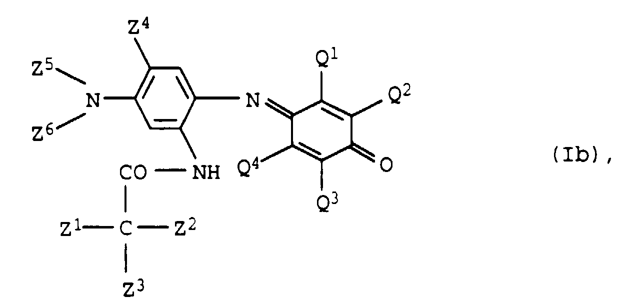 in der
- Z¹, Z² und Z³: unabhängig voneinander jeweils C₁-C₄-Alkyl, insbesondere Methyl,
- Z⁴: Wasserstoff, C₁-C₄-Alkyl oder C₁-C₄-Alkoxy,
- Z⁵ und Z⁶: unabhängig voneinander jeweils C₁-C₁₀-Alkyl und
- Q¹, Q², Q³ und Q⁴: unabhängig voneinander jeweils Wasserstoff, C₁-C₆-Alkyl, Trifluormethyl, Halogen, C₁-C₁₁-Alkanoylamino oder gegebenenfalls durch Methyl substituiertes Benzoylamino bedeuten.

Die Azamethinfarbstoffe der Formel I können nach an sich bekannten Methoden erhalten werden.

Beispielsweise kann man eine Nitrosoverbindung der Formel IV 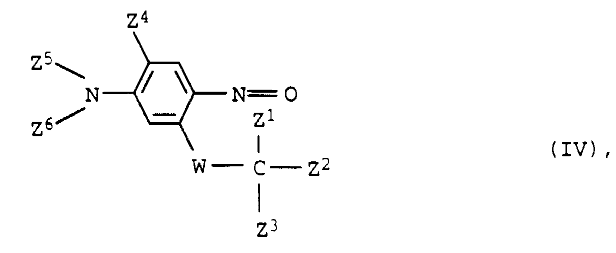 in der W, Z¹, Z², Z³, Z⁴, Z⁵ und Z⁶ jeweils die obengenannte Bedeutung besitzen, mit einer CH-aciden Verbindung der Formel V

H₂T (V),

in der T die obengenannte Bedeutung besitzt, kondensieren.

Es ist aber auch möglich, die Farbstoffe durch oxidative Kupplung einer Aminoverbindung der Formel VI 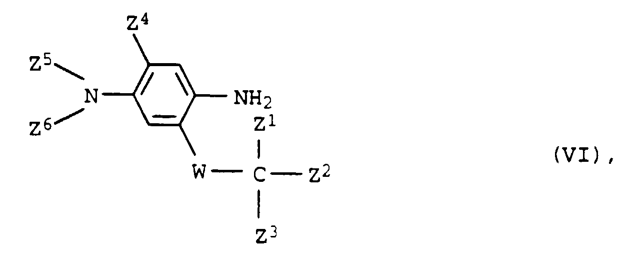 in der W, Z¹, Z², Z³, Z⁴, Z⁵ und Z⁶ jeweils die obengenannte Bedeutung besitzen, mit einer CH-aciden Verbindung der Formel V herzustellen.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Azamethinfarbstoffe der Formel I befinden.

Zur Herstellung der für das erfindungsgemäße Verfahren benötigten Farbstoffträger werden die Farbstoffe der Formel I in einem geeignete organischen Lösungsmittel oder in Mischungen von Lösungsmitteln mit einem oder mehreren Bindemitteln, gegebenenfalls unter Zugabe von Hilfsmitteln zu einer Druckfarbe verarbeitet. Diese enthält die Farbstoffe der Formel I vorzugsweise in molekular-dispers gelöster Form. Die Druckfarbe kann mittels einer Rakel auf den inerten Träger aufgetragen und die Färbung z.B. an der Luft oder mit einem Föhn getrocknet werden. Geeignete organische Lösungsmittel für die Farbstoffe der Formel I sind z.B. solche, in denen die Löslichkeit der Farbstoffe der Formel I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne das dabei eine sichtbare Auskristallisation der Farbstoffmischung auftritt.

Solche Bindemittel sind beispielsweise in der US-A-5 132 439 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel : Farbstoff beträgt im allgemeinen 1 : 1 bis 10 : 1.

Als Hilfsmittel kommen z.B. Trennmittel in Betracht, wie sie in der US-A-5 132 439 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 439 oder in den entsprechenden dort zitierten Patentanmeldungen beschrieben. Die Dicke des Farbstoff-Trägers beträgt im allgemeinen 3 bis 30 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 439 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe der Formel I zeichnen sich beim Farbstofftransfer durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (höchst mögliche Brillanz von Grund- oder Mischfarben und tiefes neutrales Schwarz).

Die erfindungsgemäßen Farbstoffe der Formel I eignen sich weiterhin vorteilhaft zum Färben von synthetischen Materialien, z.B. von Polyestern, Polyamiden oder Polycarbonaten. Insbesondere zu nennen sind textile Formen, wie Fasern, Garne, Zwirne, Maschenware, Webware oder Non-Wovens, aus Polyester, modifiziertem Polyester, z.B. anionisch modifiziertem Polyester, oder Mischgewebe von Polyester mit Cellulose, Baumwolle, Viskose oder Wolle, oder Polyamid. Die Färbe- und Druckbedingungen sind an sich bekannt. Die erfindungsgemäßen Farbstoffe können auch zum Färben von keratinischen Fasern, z.B. bei der Haarfärbung oder der Färbung von Pelzen, verwendet werden.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

### A) Herstellung

### Beispiel 1

4,96 g (0,02 mol) der Verbindung der Formel 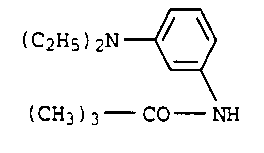 wurden in 50 ml Wasser und 20 ml konzentrierter Salzsäure gelöst. Bei 0 bis 5°C wurden 6,5 ml 23 gew.-%ige wäßrige Natriumnitritlösung zugetropft und dann 2 h bei 0 bis 5°C nachgerührt. Die resultierende Nitrosoverbindung wurde durch Zugabe von 25 gew.-%igem Ammoniakwasser auf einen pH-Wert von 8 gestellt und in Essigester aufgenommen. Die organische Phase wurde eingeengt und anschließend in Methanol gelöst. Dann wurde eine katalytische Menge an Raney-Nickel zugegeben und mittels Wasserstoffzugabe reduziert. Danach wurde das Raney-Nickel abgetrennt, die resultierende Lösung eingeengt und zu 3 g (0,03 mol) 2-Acetaminophenol in 30 ml Ethanol und 50 ml Essigester gegeben. Zum resultierenden Gemisch gab man eine Lösung aus 4,2 g Natriumcarbonat und 50 ml Wasser. Anschließend wurde eine Lösung aus 5,7 g (0,025 mol) Ammoniumperoxodisulfat in 50 ml Wasser zugetropft. Die organische Phase wurde eingeengt und der so gewonnene Farbstoff säulenchromatographisch gereinigt.

Man erhielt 2,54 g des Fabstoffs der Formel 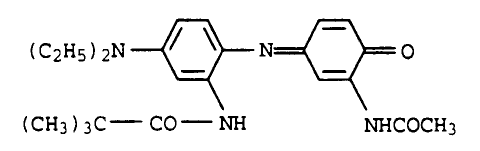 Fp.: 169°C; λₘₐₓ (in Tetrahydrofuran): 626 nm

### Beispiel 2

Analog Beispiel 1 wurden 0,025 mol der Verbindung der Formel 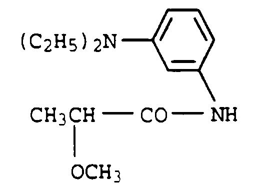 umgesetzt. Man erhielt 3,55 g des Farbstoffs der Formel 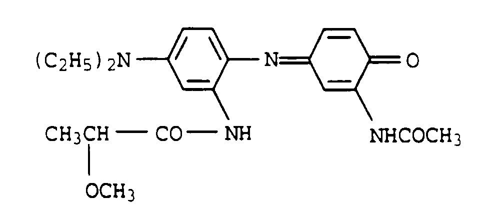 λₘₐₓ (in Tetrahydrofuran): 622 nm

### Beispiel 3

6,8 g (0,025 mol) der Verbindung der Formel 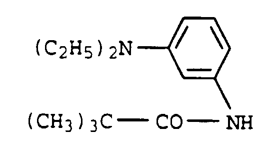 (91 gew.-%ig) wurden in 50 ml Wasser und 30 ml konzentrierter Salzsäure gelöst. Bei 0 bis 5°C wurden 8 ml 23 gew.-%ige wäßrige Natriumnitritlösung zugetropft und dann 2 h bei 0 bis 5°C nachgerührt.

Man neutralisierte mit 25 gew.-%igem Ammoniakwasser und schüttelte die resultierende Nitrosoverbindung mit Essigester aus, wobei diese in die organische Phase überging. Die organische Phase wurde eingeengt, mit 200 ml Methanol und einer katalytischen Menge an Raney-Nickel versetzt und mit Wasserstoff reduziert. Nach der Reduktion wurde der Katalysator abgetrennt und die Lösung eingeengt. Die resultierende Aminoverbindung wurde mit wenig Ethanol versetzt und zu einer Suspension von 4,9 g (0,025 mol) der Verbindung der Formel 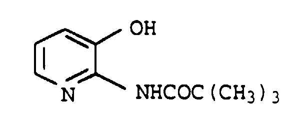 in 30 ml Essigester hinzugegeben. Anschließend fügte man eine Lösung aus 5,3 g Soda in 50 ml Wasser hinzu und tropfte dann eine Lösung aus 6,8 g Ammoniumperoxidsulfat in 50 ml Wasser zu. Es wurde über Nacht nachgerührt, dann wurde der Farbstoff durch Ausschütteln extrahiert und über eine Säule gereinigt. Anschließend wurde aus Cyclohexan umkristallisiert und getrocknet.

Man erhielt 2,44 g des Farbstoffs der Formel 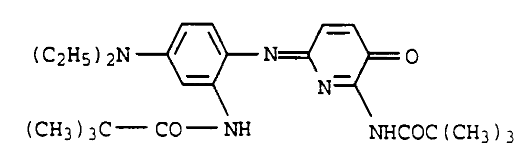 Fp.: 167°C; λₘₐₓ (in Tetrahydrofuran): 649 nm

### Beispiel 4

Man verfuhr analog Beispiel 3, verwendete jedoch die entsprechende Dipropylaminoverbindung und erhielt 2,21 g des Farbstoffs der Formel 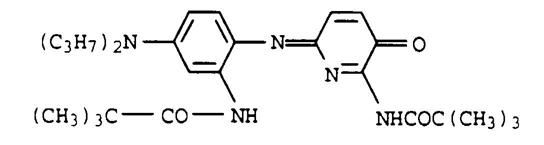 Fp.: 174°C; λₘₐₓ (in Tetrahydrofuran): 651 nm

### Beispiel 5

0,03 mol 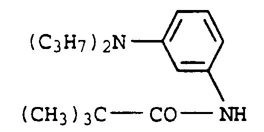 wurden in 50 ml Wasser und 15 ml konzentrierter Salzsäure gelöst. Bei 0 bis 5°C wurden 9 ml 23 gew.-%ige wäßrige Natriumnitritlösung zugetropft und dann 2 h bei 0 bis 5°C nachgerührt. Die resultierende Nitrosoverbindung wurde durch Zugabe von 25 gew.-%igem Ammoniakwasser auf einen pH-Wert von 8 gestellt und anschließend mit Essigester extrahiert. Die resultierende Lösung wurde in eine vorgelegte Lösung aus 4,3 g (0,03 mol) α-Naphthol und 20 ml Acetanhydrid gegeben. Danach wurde Essigester bis zu einer Innentemperatur von 100°C abdestilliert. Der so gewonnene Farbstoff wurde mit Wasser gefällt und säulenchromatographisch gereinigt.

Man erhielt 7,5 g des Farbstoffs der Formel 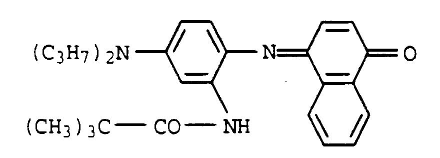 Fp.: 128°C; λₘₐₓ (in Tetrahydrofuran): 624 nm

Analog den voranstehenden Beispielen werden die in den folgenden Tabellen 1 bis 5 aufgeführten Farbstoffe erhalten.

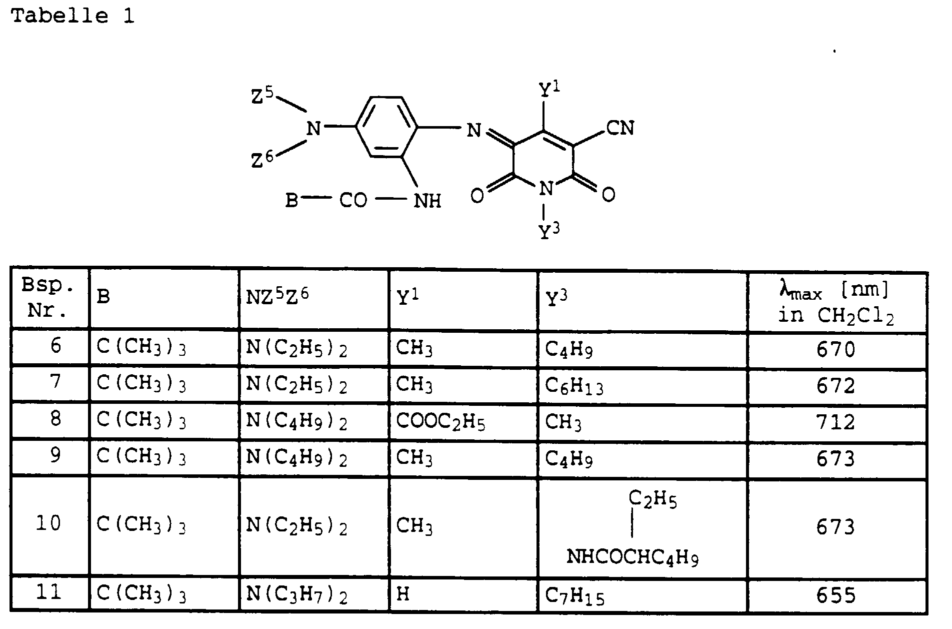

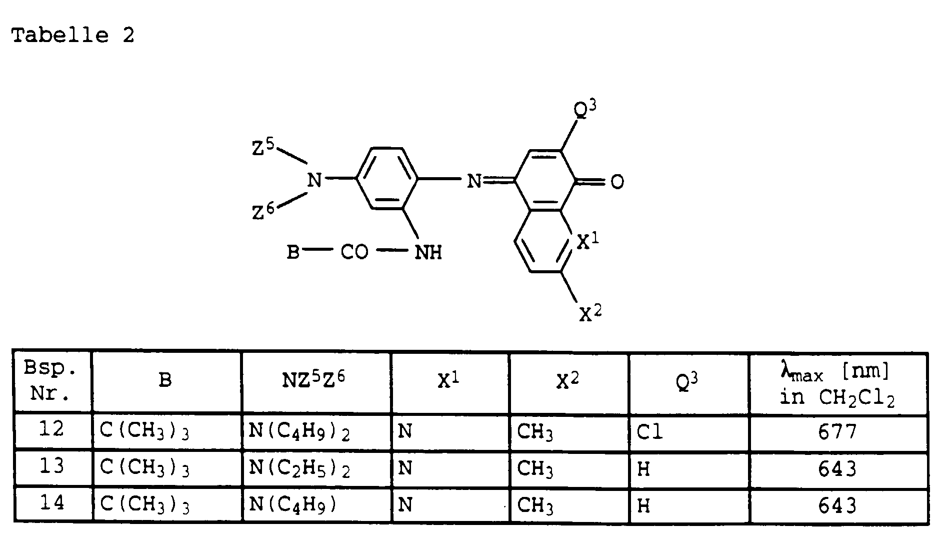

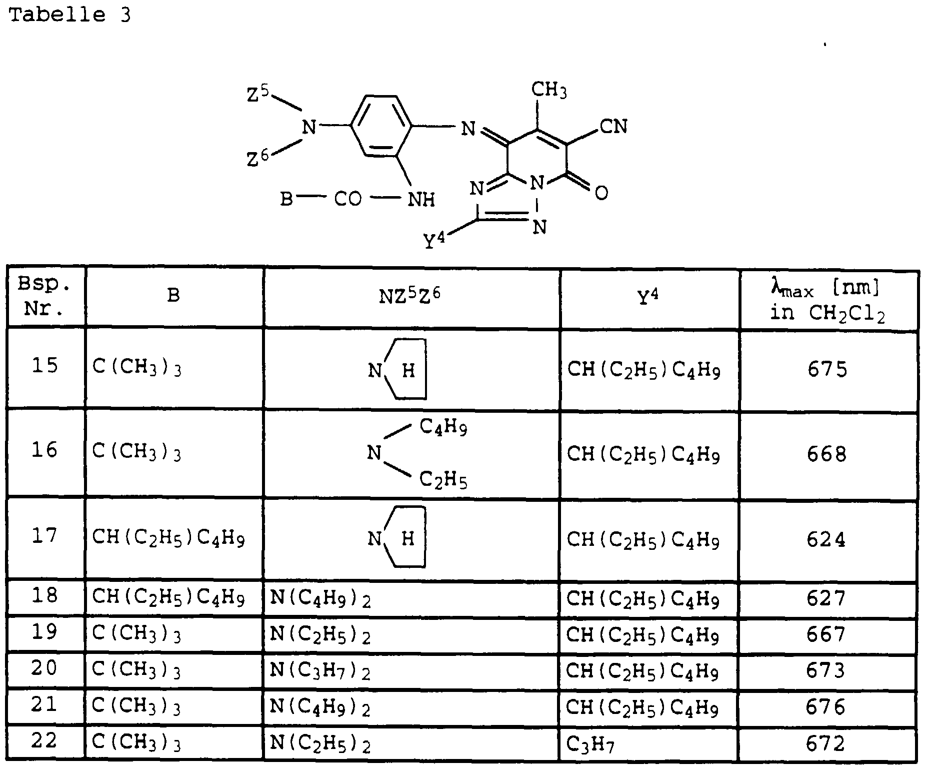

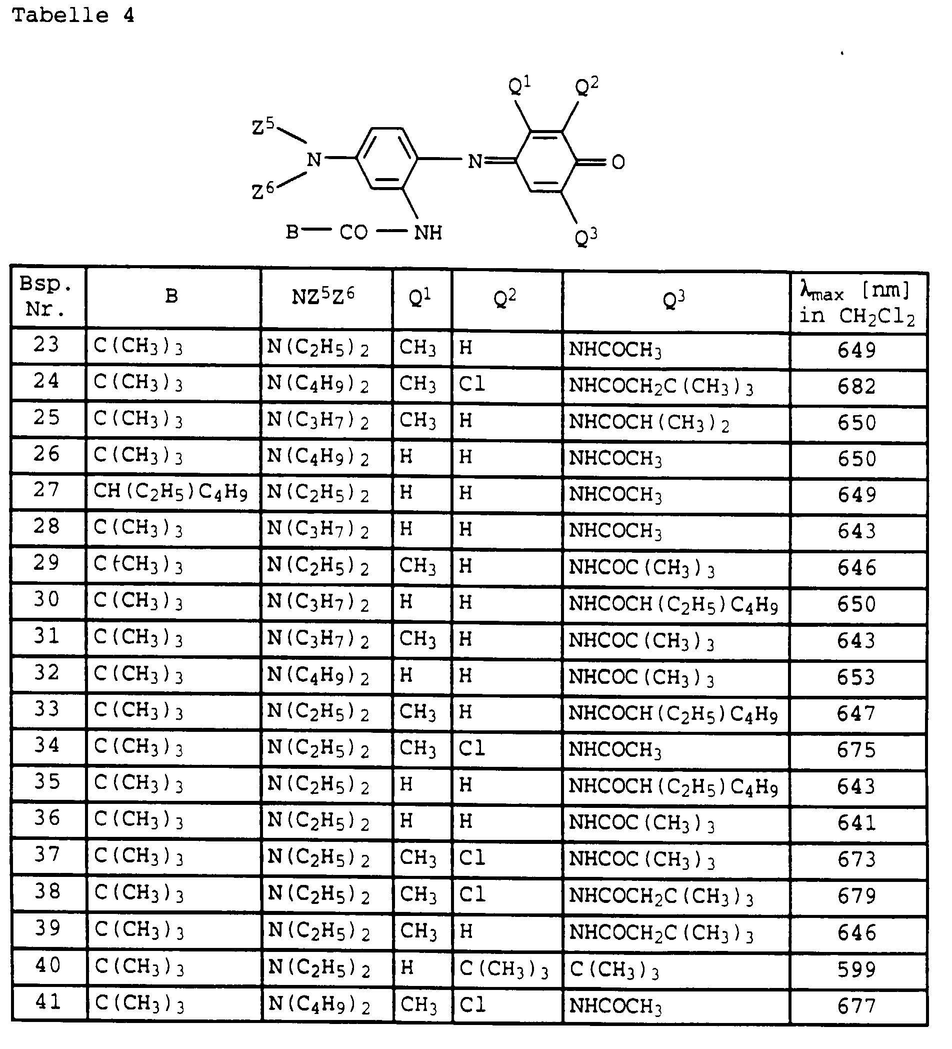

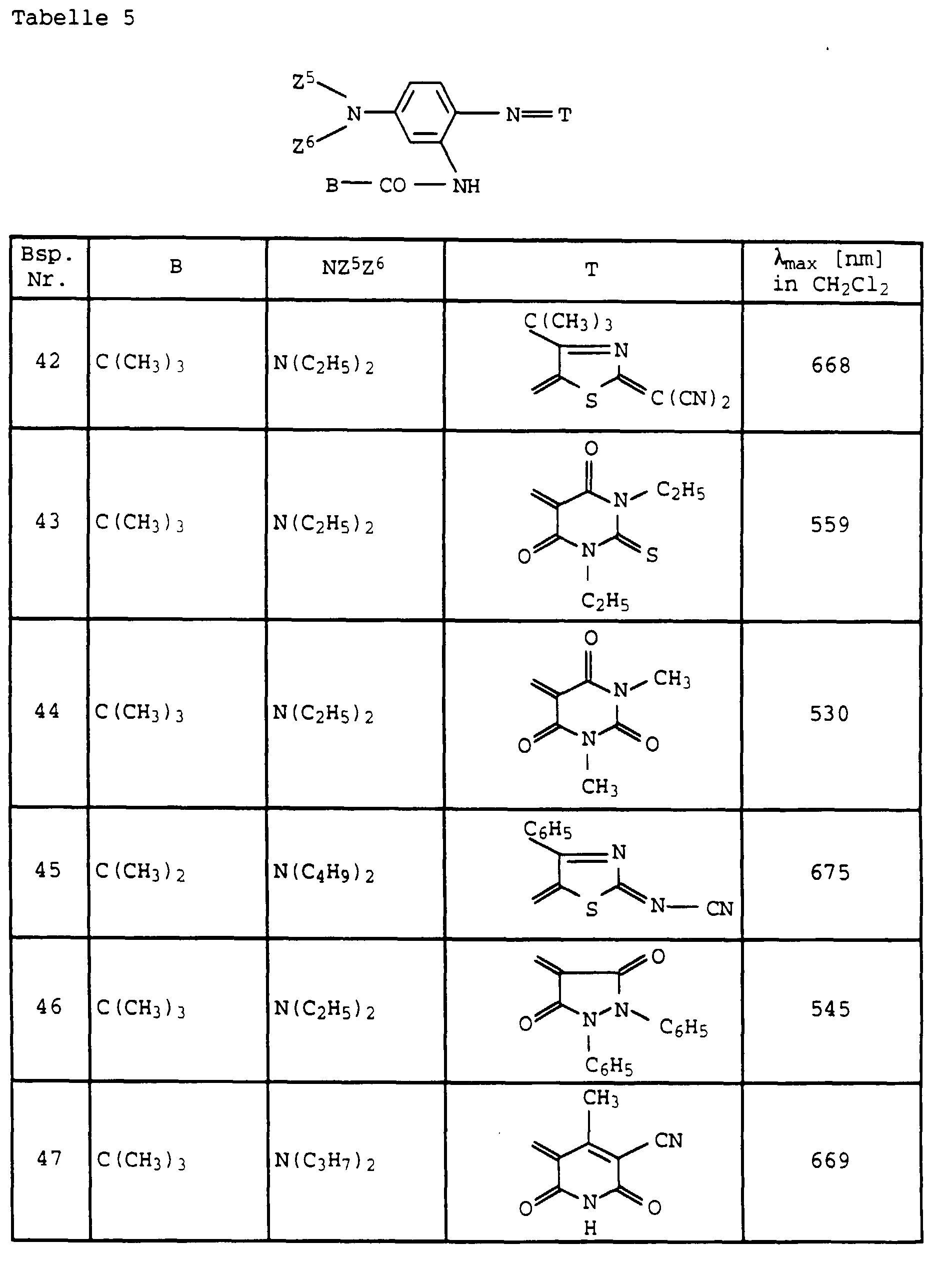

### B) Farbstofftransfer

Allgemeine Vorschrift:
a) 10 g Farbstoff werden, gegebenenfalls unter kurzzeitigem Erwärmen auf 80 bis 90°C, in 100 g einer 10 gew.%igen Lösung eines Bindemittels in ein Methylethylketon/Toluol/Cyclohexanon-Gemisch (4,5:2:2 v/v/v) eingerührt.
   Die resultierende Druckfarbe wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsüblichem Videoprintpapier (Typ VY-S von Hitachi) verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind in der folgenden Tabelle 6 aufgeführt.

(Bei den Angaben von Q* und m bezieht sich der erste Wert jeweils auf ein Bindemittel auf Basis von Polyester, der zweite jeweils auf ein Bindemittel auf Basis von Polyvinylbutyral.)

**Tabelle 6**

| Bsp. Nr. | Q* [mJ/Dot] | m [1/mJ] |
|---|---|---|
| 1 | 0,84 | 3,12 |
| | 0,97 | 2,16 |
| 2 | 0,96 | 2,47 |
| | 0,96 | 2,42 |
| 3 | 0,89 | 2,78 |
| | 0,91 | 2,44 |
| 4 | 0,89 | 2,67 |
| | 0,88 | 2,70 |
| 5 | 1,01 | 2,27 |
| | 1,11 | 1,78 |
| 6 | 0,98 | 2,17 |
| | 1,05 | 1,92 |
| 7 | 1,03 | 1,87 |
| | 1,07 | 1,72 |
| 8 | - | - |
| | 1,08 | 2,00 |
| 9 | 1,04 | 2,68 |
| | 1,12 | 1,68 |
| 10 | 1,19 | 1,84 |
| | 1,42 | 1,29 |
| 11 | 1,12 | 1,80 |
| | 1,07 | 1,88 |
| 12 | 0,97 | 2,18 |
| | 1,08 | 1,86 |
| 13 | - | - |
| | 1,09 | 1,81 |
| 14 | 1,00 | 2,04 |
| | 1,10 | 1,81 |
| 15 | 1,58 | 0,95 |
| | - | - |
| 16 | 1,21 | 1,90 |
| | 1,01 | 2,63 |
| 17 | 1,01 | 2,07 |
| | 1,22 | 1,46 |
| 18 | 1,23 | 1,87 |
| | - | - |
| 19 | 1,07 | 2,07 |
| | 1,09 | 1,86 |
| 20 | - | - |
| | 1,28 | 1,70 |
| 21 | - | - |
| | 1,33 | 1,34 |
| 22 | 1,44 | 1,32 |
| | 1,33 | 1,49 |
| 23 | - | - |
| | 0,95 | 2,32 |
| 24 | 1,02 | 2,53 |
| | 0,99 | 2,10 |
| 25 | - | - |
| | 0,99 | 2,25 |
| 26 | 0,95 | 2,70 |
| | 1,00 | 2,17 |
| 27 | - | - |
| | 1,00 | 2,03 |
| 28 | 0,98 | 2,18 |
| | 1,01 | 2,24 |
| 29 | - | - |
| | 1,03 | 2,02 |
| 30 | - | - |
| | 1,04 | 1,82 |
| 31 | - | - |
| | 1,06 | 1,73 |
| 32 | - | - |
| | 1,08 | 1,78 |
| 33 | 1,09 | 1,73 |
| | 1,12 | 1,57 |
| 34 | 1,07 | 1,85 |
| | 1,14 | 1,67 |
| 35 | 1,08 | 1,80 |
| | 1,17 | 1,40 |
| 36 | - | - |
| | 1,21 | 1,42 |
| 37 | 1,19 | 1,56 |
| | 1,24 | 1,47 |
| 38 | 1,17 | 1,76 |
| | 1,31 | 1,47 |
| 39 | - | - |
| | 1,34 | 1,26 |
| 40 | - | - |
| | 1,34 | 1,32 |
| 41 | 1,34 | 1,18 |
| | 1,38 | 1,01 |
| 42 | | |
| 43 | 0,88 | 3,25 |
| | 0,96 | 2,60 |
| 44 | 1,04 | 2,43 |
| | 1,02 | 2,63 |
| 45 | 0,95 | 2,41 |
| | 1,04 | 2,15 |
| 46 | 1,28 | 1,54 |
| | 1,31 | 1,58 |

Gute Ergebnisse werden auch mit folgenden Farbstoffen erhalten.

### Beispiel 48

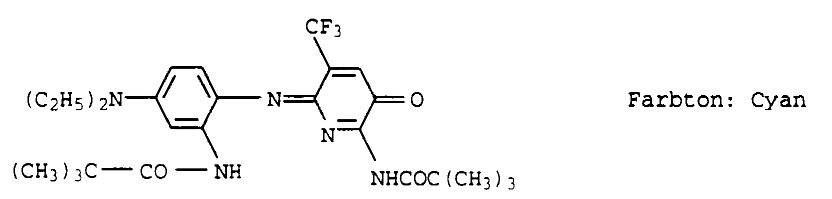

### Beispiel 49

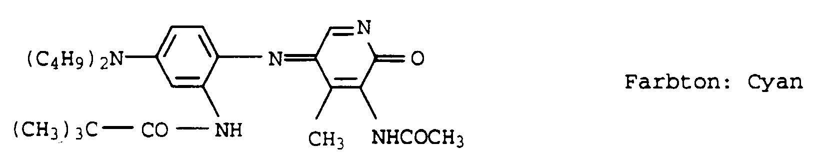

### Beispiel 50

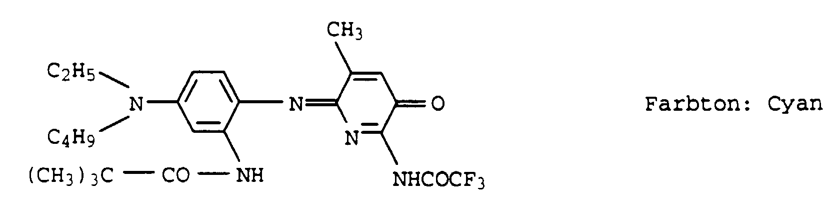

### Beispiel 51

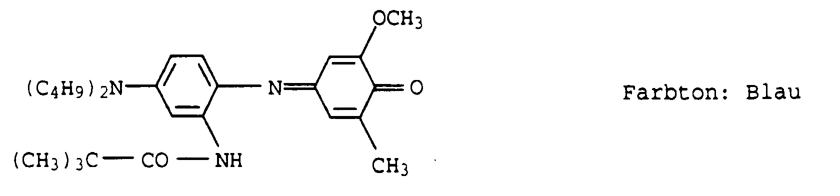

### Beispiel 52

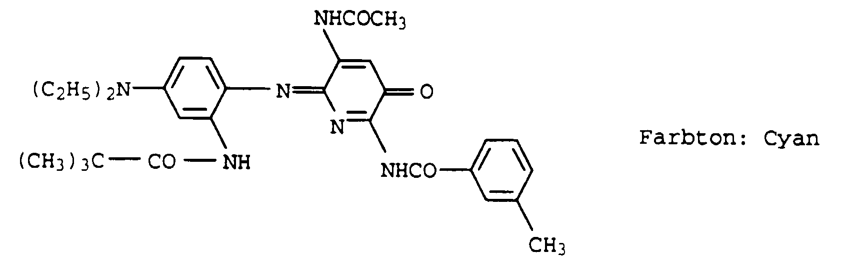

### Beispiel 53

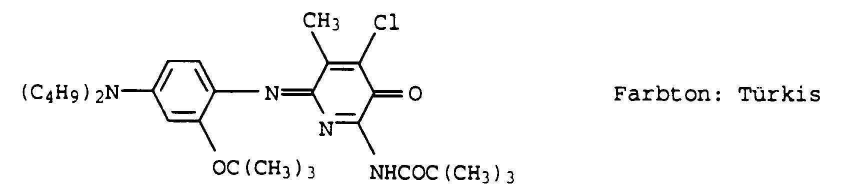

### Beispiel 54

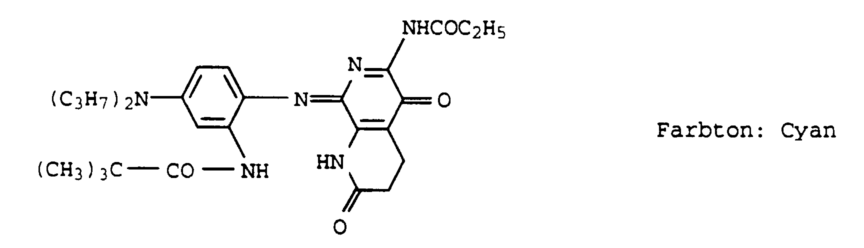

### Beispiel 55

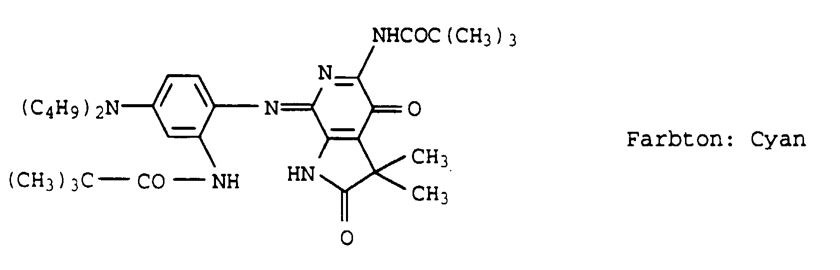

### Beispiel 56

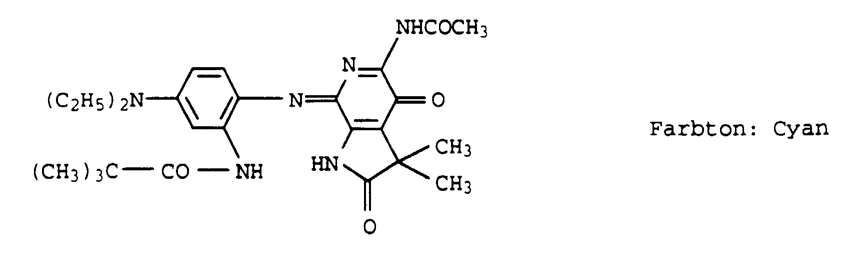

### Beispiel 57

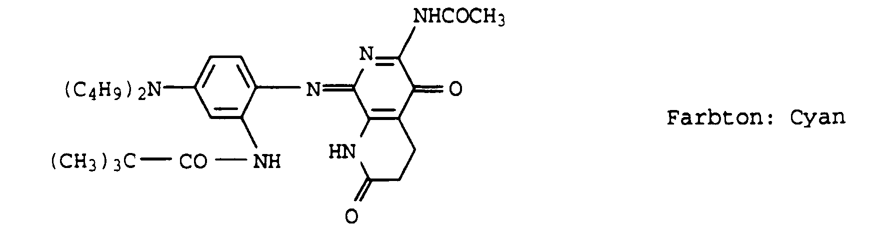

### Beispiel 58

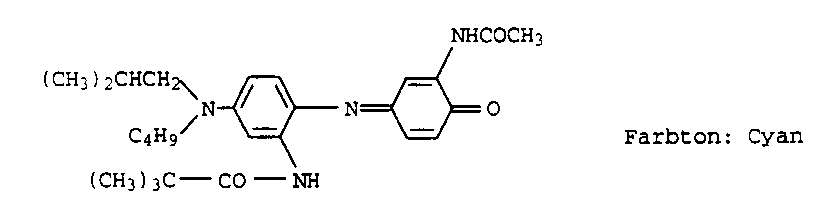

### Beispiel 59

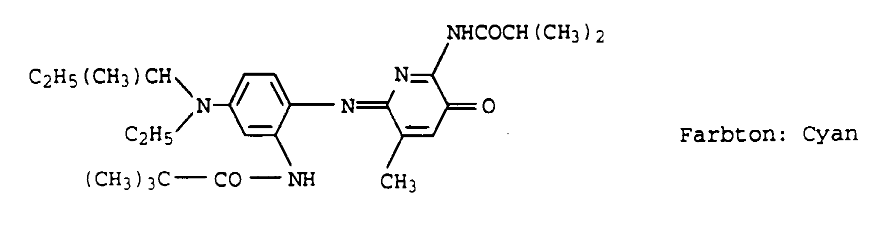

### Textile Anwendung

Mit Farbstoff 5 und 28 werden auf Polyestergewebe unter üblichen Färbebedingungen (HT-Verfahren) jeweils brillante Färbungen in Blau- und Türkistönen erhalten. Ersetzt man die in den Farbstoffen 5 und 28 enthaltene tert-Butylgruppe durch eine Methylgruppe, so findet während des Färbevorgangs eine Zersetzung des Farbstoffs statt. Dies belegt die hohe Stabilität der erfindungsgemäßen Farbstoffe.

## Patentansprüche

1. Azamethinfarbstoffe der Formel I 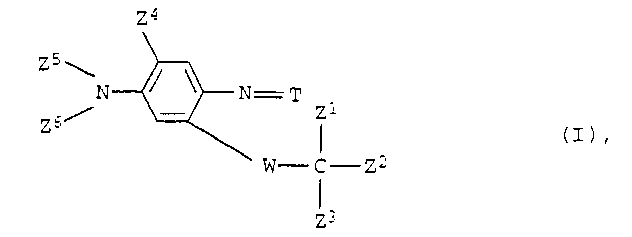 in der
W Sauerstoff, Schwefel oder einen Rest der Formel -NH-CO-, -NH-COO- oder -NH-SO₂-,
Z¹ C₁-C₄-Alkyl, das gegebenenfalls durch ein Sauerstoffatom in Etherfunktion unterbrochen ist, Benzyl, Phenylethyl, Phenyl oder C₁-C₄-Alkoxy,
Z² und Z³ unabhängig voneinander jeweils Wasserstoff, C₁-C₄-Alkyl, das gegebenenfalls durch ein Sauerstoffatom in Etherfunktion unterbrochen ist, Benzyl oder Phenylethyl, wobei der Rest-CZ¹Z²Z³ nicht linear sein darf und von Isopropyl verschieden ist,
Z⁴ Wasserstoff, C₁-C₄-Alkyl oder C₁-C₄-Alkoxy,
Z⁵ und Z⁶ unabhängig voneinander jeweils C₁-C₁₀-Alkyl, das gegebenenfalls substituiert ist und durch 1 bis 3 Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom einen 5- oder 6-gliedrigen gesättigten heterocyclischen Rest, der gegebenenfalls weitere Heteroatome enthält, oder Z⁴ und Z⁵ zusammen ein 2- oder 3-gliedriges Brückenglied, das ein Heteroatom aufweisen kann, und
T einen Rest der Formel 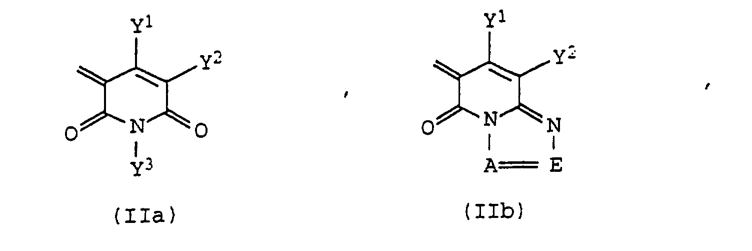 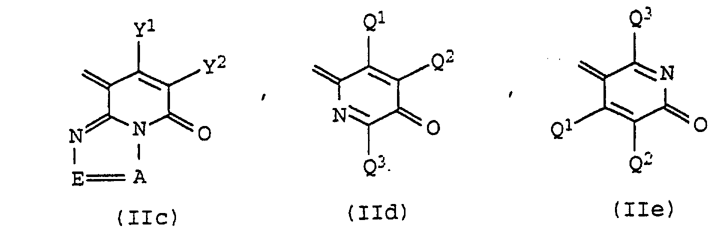 oder 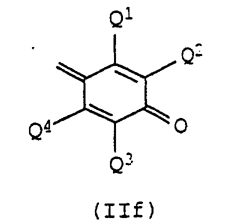 bedeuten, worin
Y¹ für Wasserstoff, C₁-C₄-Alkyl, das gegebenenfalls durch ein Sauerstoffatom in Etherfunktion unterbrochen ist, C₁-C₄-Fluoralkyl, gegebenenfalls substituiertes Phenyl, oder C₁-C₈-Alkoxycarbonyl,
Y² für Cyano, Carbamoyl, C₁-C₈-Mono- oder Dialkylcarbamoyl, Carboxyl oder C₁-C₈-Alkoxycarbonyl,
Y³ für C₁-C₁₀-Alkyl, das gegebenenfalls substituiert ist und durch 1 bis 3 Sauerstoffatome in Etherfunktion unterbrochen sein kann, C₅-C₇-Cycloalkyl, gegebenenfalls substituiertes Phenyl, oder einen Rest der Formel NB¹B², worin B¹ und B² unabhängig voneinander jeweils die Bedeutung von Wasserstoff, C₁-C₁₀-Alkyl, gegebenenfalls substituiertem Phenyl, C₁-C₉-Alkanoyl, Phenylsulfonyl, Pyridylsulfonyl, gegebenenfalls substituiertem Benzoyl, Pyridylcarbonyl oder Thienylcarbonyl besitzen, einer der beiden Reste A und E für Stickstoff und der andere für einen Rest der Formel C-Y⁴, worin Y⁴ die Bedeutung von C₁-C₂₀-Alkyl, das gegebenenfalls substituiert ist und durch 1 bis 4 Sauerstoffatome in Etherfunktion unterbrochen sein kann, gegebenenfalls substituiertem Phenyl, Mercapto oder gegebenenfalls substituiertem C₁-C₂₀-Alkylthio besitzt, und
Q¹, Q², Q³ und Q⁴ unabhängig voneinander jeweils für Wasserstoff, C₁-C₁₀-Alkyl, C₁-C₁₀-Fluoralkyl, C₁-C₄-Alkoxy, Halogen, Formylamino oder einen Rest der Formel R³, -CO-OR¹, -CO-NHR¹, -CO-NH-CO-R¹, -CO-NH-CO-R³, -CO-NH-SO₂-R³, -NH-CO-R¹, -NH-CO-OR¹, -NH-CO-NR¹R², NH-CS-OR¹, -NH-CS-NR¹R², -NH-CO-R³, -NH-SO₂-R¹, -NH-SO₂-R³ oder -NH-SO₂-NR¹R², worin R¹ und R² unabhängig voneinander jeweils die Bedeutung von C₁-C₁₀-Alkyl, das gegebenenfalls substituiert ist und durch 1 bis 3 Sauerstoffatome in Etherfunktion unterbrochen sein kann, C₁-C₁₀-Fluoralkyl, C₅-C₇-Cycloalkyl, Phenyl oder Tolyl oder -NR¹R² auch die Bedeutung von Amino und R³ die Bedeutung eines 5- oder 6-gliedrigen aromatischen heterocyclischen Rests, der gegebenenfalls benzoanelliert ist und ein oder mehrere Heteroatome, ausgewählt aus der Gruppe, bestehend aus Stickstoff, Sauerstoff und Schwefel aufweist, besitzen, oder Q¹ und Q² zusammen mit den Kohlenstoffatomen, an die sie geknüpft sind, für einen 5- oder 6-gliedrigen carbocyclischen oder heterocyclischen Ring stehen.

2. Azamethinfarbstoffe nach Anspruch 1, dadurch gekennzeichnet, daß W einen Rest der Formel -NH-CO- bedeutet.

3. Azamethinfarbstoffe nach Anspruch 1, dadurch gekennzeichnet, daß Z¹, Z² und Z³ unabhängig voneinander jeweils C₁-C₄-Alkyl bedeuten.

4. Azamethinfarbstoffe nach Anspruch 1, dadurch gekennzeichnet, daß Z⁴ Wasserstoff bedeutet.

5. Azamethinfarbstoffe nach Anspruch 1, dadurch gekennzeichnet, daß Z⁵ und Z⁶ unabhängig voneinander jeweils C₁-C₁₀-Alkyl oder zusammen mit dem sie verbindenden Stickstoffatom einen 5- oder 6-gliedrigen gesättigten heterocyclischen Rest, der noch ein Stickstoff- oder Sauerstoffatom im Ring enthalten kann, bedeuten.

6. Azamethinfarbstoffe nach den Ansprüchen 1 und 2, dadurch gekennzeichnet, daß Y¹ für C₁-C₄-Alkyl steht.

7. Azamethinfarbstoffe nach den Ansprüchen 1 und 2, dadurch gekennzeichnet, daß Y² für Cyano steht.

8. Azamethinfarbstoffe nach den Ansprüchen 1 und 2, dadurch gekennzeichnet, daß Y³ für C₁-C₁₀-Alkyl, C₁-C₉-Alkanoylamino, Benzoylamino, Bis(C₁-C₉-alkanoyl)amino oder N-(C₁-C₉-Alkanoyl)-N-benzoylamino steht.

9. Azamethinfarbstoffe nach den Ansprüchen 1 und 2, dadurch gekennzeichnet, daß Y⁴ die Bedeutung von C₁-C₂₀-Alkyl besitzt, das durch 1 bis 4 Sauerstoffatome in Etherfunktion unterbrochen sein kann.

10. Azamethinfarbstoffe nach den Ansprüchen 1 und 2, dadurch gekennzeichnet, daß Q¹, Q², Q³ und Q⁴ unabhängig voneinander jeweils für Wasserstoff, C₁-C₈-Alkyl, Halogen oder C₁-C₁₁-Alkanoylamino oder Q¹ und Q² zusammen mit den Kohlenstoffatomen, an die sie geknüpft sind, für einen Benzol-, Pyridin-, Pyrrolinon- oder Dihydropyridonring, der durch C₁-C₄-Alkyl oder Halogen substituiert sein kann, stehen.

11. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Azamethinfarbstoffe gemäß Anspruch 1 befinden.

## Claims

1. Azamethine dyes of the formula I 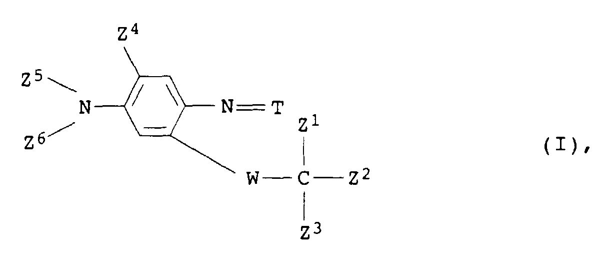 where
W is oxygen, sulfur or a radical of the formula -NH-CO-, -NH-COO- or -NH-SO₂-,
Z¹ is C₁-C₄-alkyl with or without interruption by an oxygen atom in ether function, benzyl, phenylethyl, phenyl or C₁-C₄-alkoxy,
Z² and Z³ are independently of each other hydrogen, C₁-C₄-alkyl with or without interruption by an oxygen atom in ether function, benzyl or phenylethyl, provided that radical -CZ¹Z²Z³ is not linear and is not isopropyl,
Z⁴ is hydrogen, C₁-C₄-alkyl or C₁-C₄-alkoxy,
Z⁵ and Z⁶ are independently of each other C₁-C₁₀-alkyl with or without substitution and with or without interruption by from 1 to 3 oxygen atoms in ether function, C₃-C₄-alkenyl, C₅-C₇-cycloalkyl, phenyl or tolyl, or together with the nitrogen atom joining them together a 5- or 6-membered saturated heterocyclic radical with or without further hetero atoms, or Z⁴ and Z⁵ are together a 2- or 3-membered bridge member with or without a hetero atom, and
T is a radical of the formula 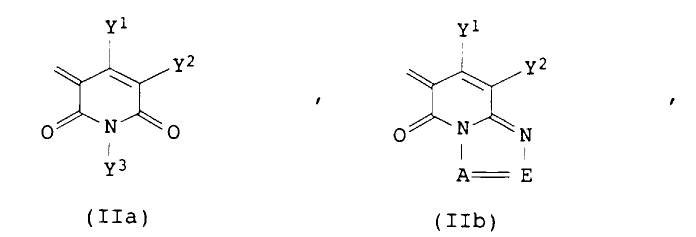 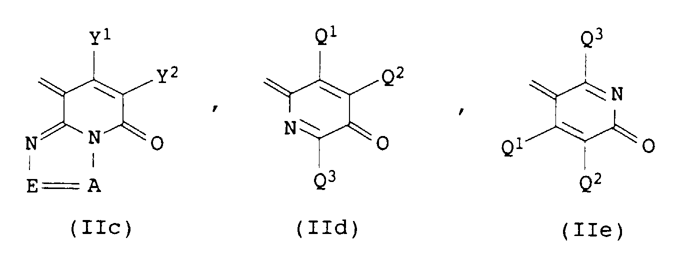 or 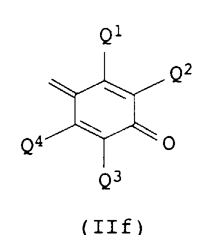 where
Y¹ is hydrogen, C₁-C₄-alkyl with or without interruption by an oxygen atom in ether function, C₁-C₄-fluoroalkyl, substituted or unsubstituted phenyl or C₁-C₈-alkoxycarbonyl,
Y² is cyano, carbamoyl, mono- or di(C₁-C₈-alkyl)carbamoyl, carboxyl or C₁-C₈-alkoxycarbonyl,
Y³ is C₁-C₁₀-alkyl with or without substitution and with or without interruption by from 1 to 3 oxygen atoms in ether function, C₅-C₇-cycloalkyl, substituted or unsubstituted phenyl or a radical of the formula NB¹B², where B¹ and B² are independently of each other hydrogen, C₁-C₁₀-alkyl, substituted or unsubstituted phenyl, C₁-C₉-alkanoyl, phenylsulfonyl, pyridylsulfonyl, substituted or unsubstituted benzoyl, pyridylcarbonyl or thienylcarbonyl,
one of A and E is nitrogen and the other is a radical of formula C-Y⁴ where Y⁴ is C₁-C₂₀-alkyl with or without substitution and with or without interruption by from 1 to 4 oxygen atoms in ether function, substituted or unsubstituted phenyl, mercapto or substituted or unsubstituted C₁-C₂₀-alkylthio, and
Q¹, Q², Q³ and Q⁴ are independently of one another hydrogen, C₁-C₁₀-alkyl, C₁-C₁₀-fluoroalkyl, C₁-C₄-alkoxy, halogen, formylamino or a radical of the formula R³, -CO-OR¹, -CO-NHR¹, -CO-NH-CO-R¹, -CO-NH-CO-R³, -CO-NH-SO₂-R³, -NH-CO-R¹, -NH-CO-OR¹, -NH-CO-NR¹R², NH-CS-OR¹, -NH-CS-NR¹R², -NH-CO-R³, -NH-SO₂-R¹, -NH-SO₂-R³ or -NH-SO₂-NR¹R², where R¹ and R² are independently of each other C₁-C₁₀-alkyl with or without substitution and with or without interruption by from 1 to 3 oxygen atoms in ether function, C₁-C₁₀-fluoroalkyl, C₅-C₇-cycloalkyl, phenyl or tolyl or -NR¹R² is also amino and R³ is a 5- or 6-membered aromatic heterocyclic radical with or without benzofusion and with or without one or more hetero atoms selected from the group consisting of nitrogen, oxygen and sulfur, or Q¹ and Q² are together with the carbon atoms to which they are bonded a 5- or 6-membered carbocylic or heterocyclic ring.

2. Azamethine dyes as claimed in claim 1 wherein W is a radical of the formula -NH-CO-.

3. Azamethine dyes as claimed in claim 1 wherein Z¹, Z² and Z³ are independently of one another C₁-C₄-alkyl.

4. Azamethine dyes as claimed in claim 1 wherein Z⁴ is hydrogen.

5. Azamethine dyes as claimed in claim 1 wherein Z⁵ and Z⁶ are independently of each other C₁-C₁₀-alkyl or together with the nitrogen atom joining them together a 5- or 6-membered saturated heterocyclic radical with or without an additional nitrogen or oxygen atom in the ring.

6. Azamethine dyes as claimed in claims 1 and 2 wherein Y¹ is C₁-C₄-alkyl.

7. Azamethine dyes as claimed in claims 1 and 2 wherein Y² is cyano.

8. Azamethine dyes as claimed in claims 1 and 2 wherein Y³ is C₁-C₁₀-alkyl, C₁-C₉-alkanoylamino, benzoylamino, bis(C₁-C₉-alkanoyl)amino or N-(C₁-C₉-alkanoyl)-N-benzoylamino.

9. Azamethine dyes as claimed in claims 1 and 2 wherein Y⁴ is C₁-C₂₀-alkyl, with or without interruption by from 1 to 4 oxygen atoms in ether function.

10. Azamethine dyes as claimed in claims 1 and 2 wherein Q¹, Q², Q³ and Q⁴ are independently of one another hydrogen, C₁-C₈-alkyl, halogen or C₁-C₁₁-alkanoylamino or Q¹ and Q² are together with the carbon atoms to which they are bonded a benzene, pyridine, pyrrolinone or dihydropyridone ring which may be C₁-C₄-alkyl- or halogen-substituted.

11. A process for transferring dyes from a transfer to a polymer-coated paper by diffusion or sublimation by means of an energy source, which comprises using a transfer comprising one or more azamethine dyes as claimed in claim 1.

## Revendications

1. Colorant azaméthinique de formule I 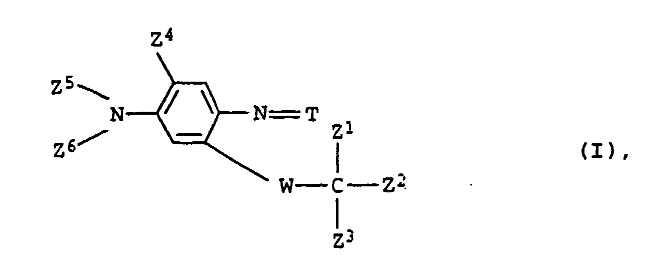 dans laquelle
W représente un atome d'oxygène, de soufre ou un reste de formule -NH-CO-, -NH-COO- ou -NH-SO₂-,
Z¹ représente un groupement alkyle en C₁-C₄, éventuellement interrompu par un atome d'oxygène en fonction éther, un groupement benzyle, phényléthyle, phényle ou alcoxy en C₁-C₄,
Z² et Z³ représentent chacun indépendamment de l'autre, un atome d'hydrogène, un groupement alkyle en C₁-C₄, éventuellement interrompu par un atome d'oxygène en fonction éther, un groupement benzyle ou phényléthyle, où le reste -CZ¹Z²Z³ ne doit pas être linéaire et est différent du groupement isopropyle,
Z⁴ représente un atome d'hydrogène, un groupement alkyle en C₁-C₄ ou alcoxy en C₁-C₄,
Z⁵ et Z⁶ représentent chacun indépendamment de l'autre, un groupement alkyle en C₁-C₁₀, éventuellement substitué et pouvant être interrompu par 1 à 3 atomes d'oxygène en fonction éther, un groupement alcényle en C₃-C₄, cycloalkyle en C₅-C₇, phényle ou tolyle ou bien forment, avec l'atome d'azote qui les relie, un reste hétérocyclique saturé à 5 ou 6 maillons pouvant contenir d'autres hétéroatomes, ou Z⁴ et Z⁵ forment ensemble un pont à 2 ou 3 maillons pouvant comporter un hétéroatome, et
T représente un reste de formule 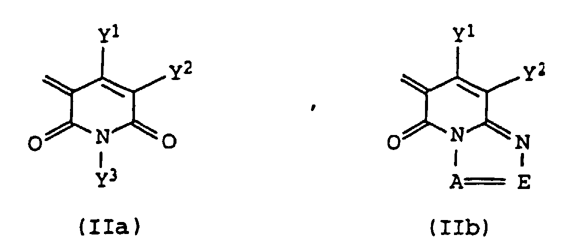 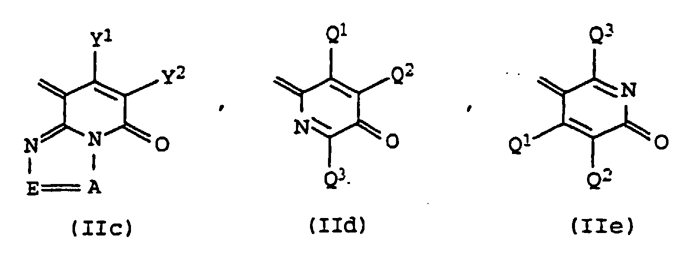 ou 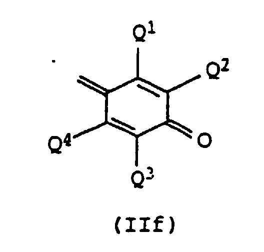 dans lesquelles
Y¹ représente un atome d'hydrogène, un groupement alkyle en C₁-C₄, éventuellement interrompu par un atome d'oxygène en fonction éther, un groupement fluoralkyle en C₁-C₄, un groupement phényle éventuellement substitué ou un groupement alcoxycarbonyle en C₁-C₈,
Y² représente un groupement cyano, carbamoyle, mono- ou dialkylcarbamoyle en C₁-C₈, carboxyle ou alcoxycarbonyle en C₁-C₈,
Y³ représente un groupement alkyle en C₁-C₁₀, éventuellement substitué et pouvant être interrompu par 1 à 3 atomes d'oxygène en fonction éther, un groupement cycloalkyle en C₅-C₇, phényle éventuellement substitué, ou un reste de formule NB¹B², où B¹ et B² représentent chacun indépendamment de l'autre, un atome d'hydrogène, un groupement alkyle en C₁-C₁₀, un groupement phényle éventuellement substitué, un groupement alcanoyle en C₁-C₉, un groupement phénylsulfonyle, pyridylsulfonyle, un groupement benzoyle éventuellement substitué, un groupement pyridylcarbonyle ou thiénylcarbonyle,
l'un des deux restes A et E est mis pour un atome d'azote et l'autre pour un reste de formule C-Y⁴, où Y⁴ représente un groupement alkyle en C₁-C₂₀, éventuellement substitué et pouvant être interrompu par 1 à 4 atomes d'oxygène en fonction éther, un groupement phényle éventuellement substitué, mercapto ou alkylthio en C₁-C₂₀ éventuellement substitué, et
Q¹, Q², Q³ et Q⁴ représentent indépendamment les uns des autres, un atome d'hydrogène, un groupement alkyle en C₁-C₁₀, fluoralkyle en C₁-C₁₀, alcoxy en C₁-C₄, un atome d'halogène, un groupement formylamino ou un reste de formule R³, -CO-OR¹, -CO-NHR¹, -CO-NH-CO-R¹, -CO-NH-CO-R³, -CO-NH-SO₂-R³, -NH-CO-R¹, -NH-CO-OR¹, -NH-CO-NR¹R², NH-CS-OR¹, -NH-CS-NR¹R², -NH-CO-R³, -NH-SO₂-R¹, -NH-SO₂-R³ ou -NH-SO₂-NR¹R², où R¹ et R² représentent chacun indépendamment l'un de l'autre un groupement alkyle en C₁-C₁₀, éventuellement substitué et pouvant être interrompu par 1 à 3 atomes d'oxygène en fonction éther, un groupement fluoralkyle en C₁-C₁₀, un groupement cycloalkyle en C₅-C₇, phényle ou tolyle ou bien -NR¹R² prend également la signification d'un groupement amino et R³ prend la signification d'un reste hétérocyclique aromatique à 5 ou 6 maillons, éventuellement benzocondensé et présentant un ou plusieurs hétéroatomes choisis dans le groupe formé par l'azote, l'oxygène et le soufre, ou bien Q¹ et Q² forment ensemble, avec les atomes de carbone auxquels ils sont reliés, un cycle hétérocyclique ou carbocyclique à 5 ou 6 maillons.

2. Colorant azaméthinique selon la revendication 1, caractérisé en ce que W représente un reste de formule -NH-CO-.

3. Colorant azaméthinique selon la revendication 1, caractérisé en ce que Z¹, Z² et Z³ représentent chacun indépendamment les uns des autres un groupement alkyle en C₁-C₄.

4. Colorant azaméthinique selon la revendication 1, caractérisé en ce que Z⁴ représente un atome d'hydrogène.

5. Colorant azaméthinique selon la revendication 1, caractérisé en ce que Z⁵ et Z⁶ représentent chacun indépendamment les uns des autres un groupement alkyle en C₁-C₁₀, ou bien forment ensemble, avec l'atome d'azote qui les relie, un reste hétérocyclique saturé à 5 ou 6 maillons pouvant en outre contenir un atome d'azote ou d'oxygène dans le cycle.

6. Colorant azaméthinique selon les revendications 1 et 2, caractérisé en ce que Y¹ représente un groupement alkyle en C₁-C₄.

7. Colorant azaméthinique selon les revendications 1 et 2, caractérisé en ce que Y² représente un groupement cyano.

8. Colorant azaméthinique selon les revendications 1 et 2, caractérisé en ce que Y³ représente un groupement alkyle en C₁-C₁₀, alcanoylamino en C₁-C₉, benzoylamino, bis(alcanoyle en C₁-C₉)amino ou N-(alcanoyle en C₁-C₉)-N-benzoylamino.

9. Colorant azaméthinique selon les revendications 1 et 2, caractérisé en ce que Y⁴ représente un groupement alkyle en C₁-C₂₀, pouvant être interrompu par 1 à 4 atomes d'oxygène en fonction éther.

10. Colorant azaméthinique selon les revendications 1 et 2, caractérisé en ce que Q¹, Q², Q³ et Q⁴ représentent chacun indépendamment les uns des autres, un atome d'hydrogène, un groupement alkyle en C₁-C₈, un atome d'halogène ou un groupement alcanoylamino en C₁-C₁₁, ou bien Q¹ et Q² forment ensemble avec les atomes de carbone auxquels ils sont liés, un cycle benzène, pyridine, pyrrolinone ou dihydropyridone, pouvant être substitué par un groupement alkyle en C₁-C₄ ou par un atome d'halogène.

11. Procédé de transfert de colorants à partir d'un support sur un papier enduit de matière plastique, par diffusion ou par sublimation, à l'aide d'une source d'énergie, caractérisé en ce que l'on utilise un support sur lequel se trouvent un ou plusieurs colorants azaméthiniques selon la revendication 1.
